## Europäisches Patentamt
## European Patent Office
## Office européen des brevets

(19)

(11) Veröffentlichungsnummer: **0 101 636**
**B1**

(12) **EUROPÄISCHE PATENTSCHRIFT**

(45) Veröffentlichungstag der Patentschrift:
08.04.87

(21) Anmeldenummer: **83201161.3**

(22) Anmeldetag: **05.08.83**

(51) Int. Cl.⁴: **H 04 L 9/02**, H 04 K 1/02

(54) **Verfahren zum Synchronisieren der Verschlüsselung und Entschlüsselung beim Übertragen digitaler, verschlüsselter Daten und Vorrichtung zum Ausführen dieses Verfahrens.**

(30) Priorität: **19.08.82 CH 4952/82**

(43) Veröffentlichungstag der Anmeldung:
**29.02.84 Patentblatt 84/9**

(45) Bekanntmachung des Hinweises auf die Patenterteilung:
**08.04.87 Patentblatt 87/15**

(84) Benannte Vertragsstaaten:
**CH DE FR GB LI NL SE**

(56) Entgegenhaltungen:
**DE-A-2 517 481**
**DE-C-1 948 096**
**FR-A-2 136 503**
**GB-A-1 590 015**
**US-A-3 575 554**

(73) Patentinhaber: **BBC Aktiengesellschaft Brown, Boveri & Cie., Haselstrasse, CH- 5401 Baden (CH)**

(72) Erfinder: **Hartmann, Peter, Dipl.- Ing., Narzissenstrasse 440, CH- 5212 Hausen (CH)**

EP 0 101 636 B1

## Beschreibung

Die vorliegende Erfindung betrifft ein Verfahren zum Synchronisieren der Verschlüsselung und Entschlüsselung beim Uebertragen digitaler, verschlüsselter Daten von einem Sender zu einem Empfänger, wobei sendeseitig eine Folge von Synchronisiersignalen mit einer ersten Taktfrequenz erzeugt und periodisch in einen mit einer zweiten Taktfrequenz übertragenen Datenstrom eingeblendet wird, sowie eine Vorrichtung zum Ausführen dieses Verfahrens.

Einrichtungen zur Verschlüsselung werden vorzugsweise eingesetzt, wenn Informationen, die auf einfach zugänglichen Uebertragungswegen übermittelt werden, nur für einen bestimmten Empfänger oder für einen definierten Kreis von Empfängern verständlich sein sollen. Ein bekanntes Beispiel dafür sind Funkverbindungen, die mit jedermann zugänglichen technischen Mitteln abgehört werden können.

Das zu verschlüsselnde Signal wird im Sender in einem Schlüsselmodulator verschlüsselt, welcher durch einen Schlüsselgenerator gesteuert wird. Das nunmehr verschlüsselte Ausgangssignal des Schlüsselmodulators wird zum Empfänger übertragen, wobei als Uebertragungsstrecke beispielsweise eine Telefonleitung oder eine Funkverbindung dienen kann. Im Empfänger wird das empfangene Signal einem Schlüsseldemodulator zugeführt, welcher ebenfalls durch einen Schlüsselgenerator gesteuert wird. Das Ausgangssignal des Schlüsseldemodulators ist genau dann mit dem ursprünglichen Signal identisch, wenn an beiden Schlüsselgeneratoren der gleiche Code eingestellt ist und die Schlüsselrechner synchron laufen (DE-C- 1 948 096).

In einer bekannten Ausführung einer Verschlüsselungseinrichtung für Sprachsignale wird beim Sender das in analoger Form anstehende Sprachsignal vorerst in einem Analog-/Digitalwandler in einen binären Datenstrom umgewandelt, welcher durch modulo-2-Addition einer vom Schlüsselgenerator erzeugten binären Pseudozufallsfolge verschlüsselt wird. Empfangsseitig erfolgt die Entschlüsselung durch eine weitere modulo-2-Addition der gleichen Pseudozufallsfolge. Aus dem entstehenden Summensignal wird durch eine Digital-/ Analogwandlung das analoge Sprachsignal wiedergewonnen.

In einer bekannten Ausführung eines Schlüsselrechners wird die geheime Pseudozufallsfolge aus einer an sich nicht geheimen Pseudozufallsfolge (Ursignal) in einem Schaltwerk erzeugt, dessen Abläufe vom geheimen Code abhängig sind. Als Ursignalgenerator kann ein Zufallsgenerator verwendet werden, der ein Schieberegister enthält und ein exklusives ODER-Tor, dessen beide Eingänge mit je einem Speicherplatz und dessen Ausgang mit dem Eingang des Schieberegisters verbunden sind bzw. ist. Wird in die Schieberegister zweier gleichermassen aufgebauter Zufallsgeneratoren dieser Art die gleiche Anfangssignalfolge eingelesen und werden die Generatoren synchron betrieben, dann erscheinen bei jedem der aufeinanderfolgenden Arbeitstakte an den Ausgängen der exklusiven ODER-Tore die gleichen Signale. Für den synchronen Betrieb der Ursignalgeneratoren im Sender- und Empfangsgerät enthält jedes Gerät einen quarzgesteuerten Oszillator als Taktgeber. Dem Taktgeber im Empfangsgerät ist eine Phasenregelschleife zugeordnet, die den Frequenz- und Phasengleichlauf sicherstellt. Für das Einstellen der gleichen Signalfolgen der Ursignalgeneratoren sind unterschiedliche Verfahren gebräuchlich.

Bei der Startsynchronisierung wird zu Beginn einer Uebertragung eine zusammenhängende Folge von Synchronisiersignalen ausgesendet, bei der Dauersynchronisierung werden in den Strom der gesendeten kodierten Signale periodisch Synchronisiersignale eingeblendet, welche Synchronisiersignalfolge bzw. periodischen Synchronisiersignale in das Schieberegister des Ursignalgenerators im Empfangsgerät eingelesen werden. Die Startsynchronisierung ermöglicht das rasche Einstellen des Gleichlaufs des Ursignalgenerators im Empfangsgerät, hat aber den Nachteil, dass für ein erst nach dem Aussenden der Synchronisiersignalfolge zugeschaltetes Empfangsgerät der Gleichlauf des Ursignalgenerators nicht bzw. erst beim Aussenden einer weiteren Synchronisiersignalfolge eingestellt werden kann, dass die Einstellung des Gleichlaufs und der Gleichlauf des Ursignalgenerators selbst durch Dritte gestört werden kann, und dass nach einer Störung und unabhängig von deren Ursache der Gleichlauf des Ursignalgenerators und damit die richtige Dekodierung einer empfangenen kodierten Information bis zum Aussenden einer weiteren Synchronisiersignalfolge unterbrochen bleibt. Demgegenüber ermöglicht die Dauersynchronisierung das Zuschalten eines oder mehrerer Empfangsgeräte auch nach Beginn einer Uebertragung und kann der Ursignalgenerator im Empfangsgerät nach einer Störung den Gleichlauf wiederfinden. Diesen Vorteilen der Dauersynchronisierung steht der Nachteil gegenüber, dass die Einstellung des Gleichlaufs des Ursignalgenerators im Empfangsgerät wesentlich länger dauert als bei der Startsynchronisierung. Geht während der Uebertragung die Synchronisierung verloren, beispielsweise wegen Schwundeinbrüchen (fadings) oder Phasensprüngen der Signalfolge, dauert es bis zur Neusynchronisierung eine relativ lange Zeit.

Der vorliegenden Erfindung liegt darum die Aufgabe zugrunde, die beschriebenen Nachteile zu beheben und ein Verfahren zum Synchronisieren des empfangsseitigen Ursignalgenerators in einer Anlage zum Uebertragen verschlüsselter Daten zu schaffen, mit dem die zeitliche Verschiebung der im Empfänger erzeugten Ursignale gegenüber den Synchronisiersignalen im Datenstrom praktisch ohne zeitliche Verzögerung korrigiert werden kann.

Erfindungsgemäss wird diese Aufgabe mit einem Verfahren der eingangs genannten Art gelöst, das dadurch gekennzeichnet ist, dass nach einer erstmaligen Synchronisierung empfangsseitig wenigstens eine, mit der eingeblendeten Folge von Synchronisiersignalen übereinstimmende Signalfolge erzeugt und der übertragene Datenstrom in zeitliche Rahmen $R_n$ mit mehreren Zeitschlitzen $s_n$, $i_{n,1}$... $i_{n,9}$ unterteilt wird, wobei die Länge eines Rahmens $R_n$ gleich der Periodendauer der ersten Taktfrequenz und die Länge eines Zeitschlitzes gleich der Periodendauer der zweiten Taktfrequenz ist, und dass mit der empfangsseitig erzeugten Signalfolge in mehreren Zeitschlitzen des empfangenen Datenstroms Korrelationen durchgeführt und die Ergebnisse dieser Korrelationen zu einer Ueberwachung des empfangenen Datenstroms und einer Korrektur der Synchronisierung im Empfänger verwendet werden.

Das erfindungsgemässe Verfahren ermöglicht, nach jeder Unterbrechung oder Störung der Uebertragung sowie beim Richtungswechsel, die Empfängersynchronisiersignale mit einer Mehrzahl Ursignalfolgen zu vergleichen, womit erreicht wird, dass ein im Bereich eines Rahmens der empfangenen Signalfolge verschobenes Synchronisiersignal immer eine gleichlaufende im Empfänger erzeugte Ursignalfolge findet, und dass diese gleichlaufende Ursignalfolge an den Schlüsselrechner weitergeleitet wird.

Nachfolgend wird eine bevorzugte Ausführungsform der erfindungsgemässen Vorrichtung mit Hilfe der Figuren beschrieben.

Es zeigen:

Fig. 1 das stark vereinfachte Schaltbild des zum Verschlüssein von Daten vorgesehenen Teils eines. Sendegerätes,

Fig. 2 die schematische Darstellung einer Folge digitaler Informationen mit periodisch eingeblendeten Synchronisiersignalen,

Fig. 3 das stark vereinfachte Blockschaltbild des zum Entschlüssein von Daten vorgesehenen Teils des Empfangsgeräts nach dem Stand der Technik,

Fig. 4 das Blockschema einer Ausführungsform der erfindungsgemässen Vorrichtung zum Synchronisieren,

Fig. 5 das Blockschema einer Ausführungsform des Subsignalgenerators in der Vorrichtung gemäss Fig. 4 und

Fig. 6 das Blockschema einer Ausführungsform zur Kompensation der Ansprechzeit der Korrelatoren.

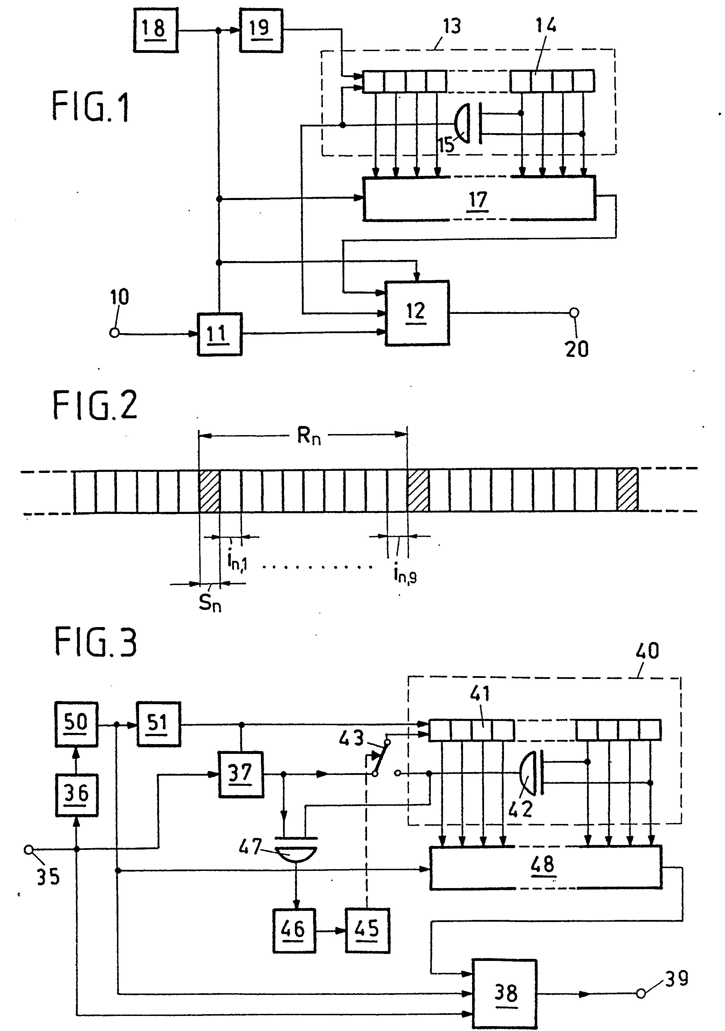

Der in Fig. 1 stark vereinfacht gezeichnete Teil eines zum Verschlüssein von Sprachsignalen

geeigneten Teils eines Sendegerätes weist eine Eingangsklemme 10 für ein analoges Eingangssignal auf. Von der Eingangsklemme führt eine Leitung zum Signaleingang eines A/D-Wandlers 11, dessen Ausgang mit einem ersten Eingang eines Modulators 12 verbunden ist. Weiter enthält dieser Teil des Sendegeräts einen Ursignalgenerator 13 mit einem Schieberegister 14 und einem exklusiven ODER-Tor 15, das nachfolgend auch als XOR-Tor bezsichnet ist. Die beiden Eingänge dieses XOR-Tors sind mit zwei Speicherstellen im ausgangsseitigen Teil des Schieberegisters verbunden und vom Ausgang des XOR-Tors führt eine verzweigte Verbindungsleitung zum Eingang des Schieberegisters 14 und zu einem zweiten Eingang des Modulators 12. Die Speicherstellen des Schieberegisters sind mit den Eingängen eines Schlüsselrechners 17 verbunden. Der Ausgang des Schlüsselrechners ist an einen dritten Eingang des Modulators 12 geführt.

Der beschriebene Teil des Sendegeräts ist an einen Taktgeber 18 angeschlossen, der die Arbeitstakte mindestens für den A/D-Wandler, den Schlüsselrechner und den Modulator liefert, sowie die Eingangssignale für einen Taktuntersetzer 19, der einen heruntergesetzten Arbeitstakt für den Ursignalgenerator erzeugt.

Beim Betrieb dieses Sendegeräts wird das analoge Eingangssignal im A/D-Wandler 11 in eine Folge binärer Klarsignale gewandelt, die mit der Frequenz des Taktgebers 18 in den Modulator 12 eingegeben werden. Der vom Taktgeber erzeugte Arbeitstakt wird im Untersetzer 19 beispielsweise im Verhältnis 10:1 untersetzt, und die untersetzte Taktfolge wird zum Steuern der Verschiebung der binären Signale im Schieberegister verwendet. Durch die Rückkopplung des Inhalts zweier Stellen des Schieberegisters über das XOR-Tor 15 an den Eingang des Schieberegisters wird der Inhalt des Registers bei jedem Takt der untersetzten Taktfolge geändert. Der Inhalt der Speicherstellen wird bei jedem Arbeitstakt in den Schlüsselrechner 17 eingelesen, an dessen Ausgang dann ein Kodiersignal für den Modulator erscheint. Zugleich wird bei jedem Takt der untersetzten Taktfolge für die Dauer eines Arbeitstakts das Ausgangssignal des XOR-Tors 15 (bzw. das Eingangssignal für das Schieberegister) an den Modulator geleitet und in die Folge der kodierten oder Kryptosignale eingeblendet.

In Fig. 2 ist die an der Ausgangsklemme 20 des in Fig. 1 gezeigten Teils des Sendegeräts erscheinende Kryptosignalfolge mit periodisch eingeblendeten Synchronisiersignalen schematisch gezeigt. Danach besteht die Signalfolge aus aufeinanderfolgenden, zeitlichen Rahmen $R_n$, von denen im gewählten Beispiel jeder zehn Zeitschlitze aufweist, wovon einer als Synchronisierschlitz $s_n$ und die anderen als eine Folge von neun Informationsschlitzen $i_{n,1}$ $i_{n,2}$... $i_{n,9}$ verwendet werden. Die Länge der Rahmen stimmt mit der Periodendauer des heruntergesetzten Arbeitstaktes für den Ursignalgenerator überein.

Der in Fig. 3 stark vereinfacht gezeichnete, zum Entschlüsseln einer Kryptosignalfolge geeignete Teil eines Empfangsgeräts enthält eine Eingangsklemme 35, die mit einer Phasenregelschleife 36, einem Schalter 37 und einem Eingang eines Demodulators 38 verbunden ist. Dieser Teil des Empfangsgeräts enthält weiter einen Ursignalgenerator 40 mit einem Schieberegister 41 und einem XOR-Tor 42. Die beiden Eingänge dieses XOR-Tors sind in der gleichen Weise wie bei dem Ursignalgenerator im Sendegerät an Speicherstellen im Schieberegister angeschlossen. Vom Eingang des Schieberegisters führt eine Leitung zu einem Umschalter 43, der zum wahlweisen Verbinden des Eingangs des Schieberegisters mit dem Ausgang des XOR-Tors 42 oder dem Ausgang des Schalters 37 vorgesehen ist. Zum Steuern des Umschalters 43 wird eine Schwellwertmesseinrichtung 45 verwendet, deren Eingang mit dem Ausgang eines Zählers 46 verbunden ist. Der Zähler ist an den Ausgang eines weiteren XOR-Tors 47 angeschlossen, dessen Eingänge mit dem Ausgang des zum Ursignalgenerator gehörenden XOR-Tors 42 bzw. mit dem Ausgang des Schalters 57 verbunden ist. Von den Speicherstellen des Schieberegisters führen Leitungen zu zugeordneten Eingängen eines Schlüsselrechners 48, dessen Ausgang an einen zweiten Eingang des Demodulators 38 angeschlossen ist. An der Ausgangsklemme 39 des Demodulators erscheint das entschlüsselte Signal. Die Phasenregelschleife 36 wirkt mit einem Taktgeber 50 zusammen, dessen Ausgang mit dem Schlüsselrechner und dem Demodulator und einem Taktuntersetzer 51 verbunden ist, von dem Leitungen zum Schieberegister 41 und zum Schalter 37 führen.

Für die Beschreibung der Arbeitsweise dieses Teils des Empfangsgeräts sei angenommen, dass der Taktgeber 50 Arbeitstakte mit der gleichen Frequenz wie der Taktgeber im Sendegerät erzeugt, dass die Phasenregelschleife 36 den Phasengleichlauf der erzeugten Arbeitstakte mit den Signalen der an die Eingangsklemme 35 geleiteten Kryptosignalfolge bewirkt, dass das Untersetzungsverhältnis des Taktuntersetzers 51 gleich demjenigen des Taktuntersetzers 19 im Sendegerät ist, und dass der Umschalter 43 beim Einschalten des Empfangsgeräts oder zu Beginn einer Uebertragung in der in Fig. 3 gezeigten Stellung steht. Jeder Takt des Taktuntersetzers 51 tastet den Schalter 37 auf Durchlass, so dass die Synchronisiersignale aus dem Strom der an der Eingangsklemme 35 erscheinenden Kryptosignale über den Umschalter 43 in das Schieberegister 41 eingelesen werden. Sobald die Anzahl der eingelesenen Synchronisiersignale gleich der Ordnungszahl derjenigen Speicherstelle ist, die mit einem Eingang des zugeordneten XOR-Tors verbunden und vom Eingang des Schieberegisters am weitesten entfernt ist, sollte bei ungestörter Uebertragung der Inhalt von der ersten bis zu der vorgängig definierten Speicherstelle des Schieberegisters im Sende- und im Empfangsgerät gleich sein. Dann sind auch die am Ausgang der mit den Schieberegistern zusammenwirkenden XOR-Tore erscheinenden Signale, die im Empfangsgerät auch an das weitere XOR-Tor 47 geleitet werden, gleich. Die aufeinanderfolgenden, gleichen Signalen entsprechenden Ausgangssignale dieses weiteren XOR-Tors werden im Zähler 46 gezählt und der Zählerstand an die Schwellwertmesseinrichtung 45 geleitet. Sobald diese Einrichtung einen voreinstellbaren Schwellwert erreicht, wird der Umschalter 43 umgeschaltet. Dann wird die Zuleitung der Synchronisiersignale aus dem Strom der Kryptosignale unterbrochen, und es werden für den autonomen Lauf des Signalgenerators die Ausgangssignale des XOR-Tors 42 in das Schieberegister eingelesen. Der Inhalt der Speicherstellen des Schieberegisters im Empfangsgerät entspricht dann bei jedem Arbeitstakt dem Inhalt der entsprechenden Speicherstelle des Sendegeräts, weshalb (bei gleichem Schlüssel) auch das Ausgangssignal des Schlüsselrechners 48 im Empfangsgerät demjenigen im Sendegerät gleich ist, und am Ausgang 39 des Demodulators 38 ein Klarsignal erscheint, das dem in das Sendegerät eingegebenen Klarsignal entspricht.

Bei der beschriebenen Synchronisiervorrichtung läuft der Ursignalgenerator im Empfangsgerät demjenigen im Sendegerät um die Laufzeit der elektromagnetischen Wellen zwischen Sende- und Empfangsgerät nach. Diese Zeitverschiebung ist ohne praktische Bedeutung, weil für die Dekodierung der Kryptosignale nur der Gleichlauf zwischen dem Ursignalgenerator im Empfangsgerät mit dem Takt und der Phase der empfangenen Signale wichtig ist. Wird die Uebertragung für eine kurze Zeit unterbrochen, beispielsweise durch Fadings, und damit die Phasenregelschleife unwirksam, dann besteht die Möglichkeit, dass die Phasen der empfangenen Signalfolge und der vom Ursignalgenerator im Empfänger erzeugten Signalfolge auseinanderlaufen. Beträgt beispielsweise die Taktfrequenz 16 k Bits/Sekunde und die Stabilität des Ursignalgenerators $\pm$ 2.10$^{-5}$, dann kann für eine Unterbrechung des Empfangs während 10 Sekunden die Phasenverschiebung 3,2 Takte betragen. Auch beim Wechsel der Uebertragungsrichtung, wenn der bisherige Empfänger zum Sender und der bisherige Sender zum Empfänger wird, wird die oben beschriebene, durch die Laufzeit der elektromagnetischen Wellen bedingte Phasenverschiebung wirksam. Weil beim Richtungswechsel die Phasenverschiebung der doppelten Entfernung zwischen Sender und Empfänger proportional ist, bewirkt bei der beispielsweise genannten Taktfrequenz von 16 k Bits/Sekunde bereits eine Entfernung von etwa 10 km eine Phasenverschiebung von mehr als einer Bitdauer.

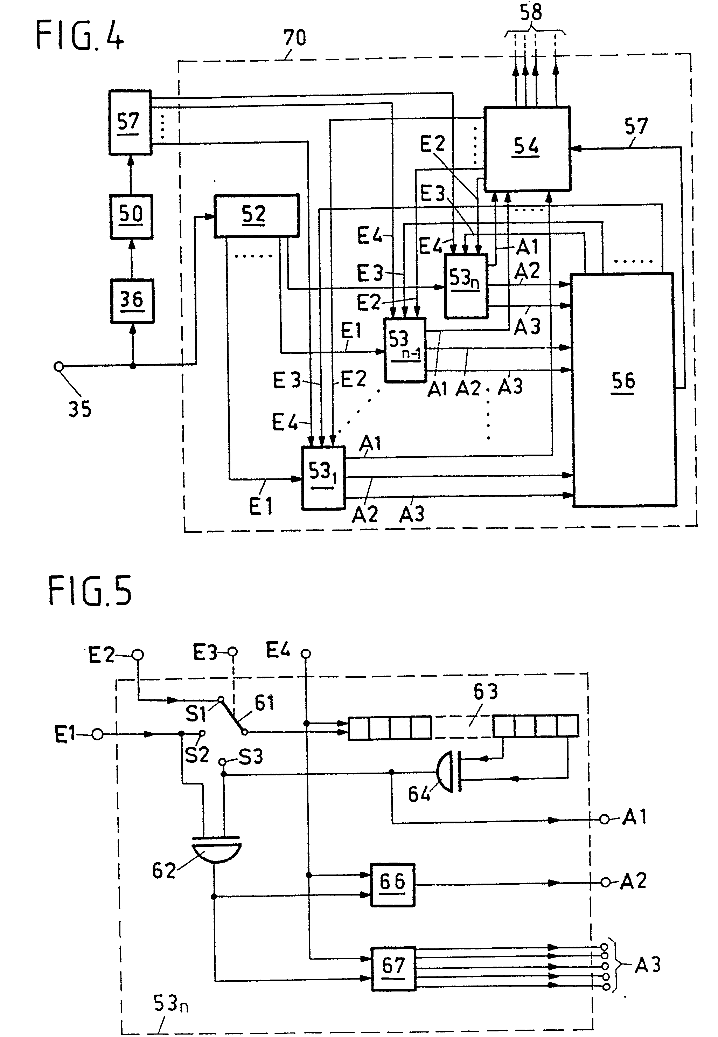

Um den Gleichlauf zwischen den empfangenen Kryptosignalen und den empfängerseitigen Ursignalen und damit die korrekte Entschlüsselung sicherzustellen, enthält der erfindungsgemässe Ursignalgenerator mindestens so viele Subsignalgeneratoren, wie ein Rahmen $R_n$ in der übertragenen Signalfolge Zeitschlitze enthält. Das Blockschaltbild einer bevorzugten Ausführungsform dieses Ursignalgenerators ist in Fig. 4 gezeigt. Das an der Eingangsklemme 35 ankommende Kryptosignal wird über eine Leitung dem Serie-/Parallelwandler 52 zugeführt, dessen Ausgänge mit einem Eingang El jedes der Subsignalgeneratoren $53_1$ bis $53_n$ verbunden sind. Jeder Subsignalgenerator weist drei Ausgänge A1, A2, A3 auf, wovon der erste Ausgang A1 mit einem Eingang einer Schaltmatrix 54 und die beiden Ausgänge A2, A3 mit Eingängen einer Steuerlogik 56 verbunden sind. Ausgänge der Schaltmatrix sind mit je einem zweiten und Ausgänge der Steuerlogik mit je einem dritten Eingang E2 bzw. E3 der Subsignalgeneratoren verbunden. Eine weitere Leitung 57 führt von der Steuerlogik zur Schaltmatrix und Leitungen 58 sind zur Verbindung der Schaltmatrix mit dem (nicht gezeigten) Schlüsselrechner vorgesehen.

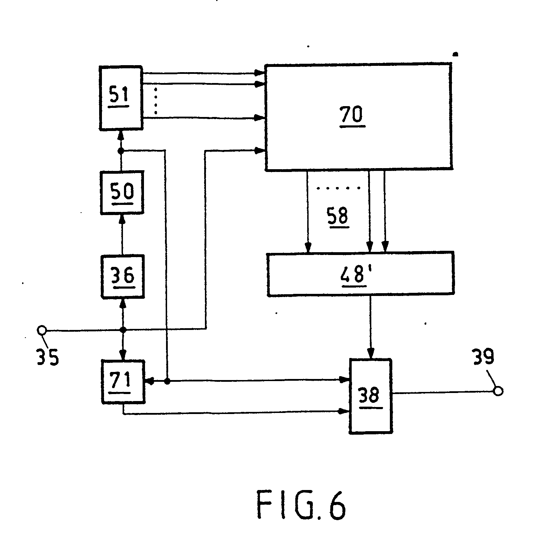

Eine erprobte Ausführungsform eines Subsignalgenerators ist in Fig. 5 gezeigt. Von der Eingangsklemme El führt eine verzweigte Leitung zu einem ersten Kontakt S2 eines dreipoligen Umschalters 61 und zu einem ersten Eingang eines ersten XOR-Tors 62. Die Schaltzunge ist mit dem Eingang eines Schieberegisters 63 verbunden, von dem zwei Speicherstellen mit ihren Ausgängen an die Eingänge eines zweiten XOR-Tors 64 angeschlossen sind. Vom Ausgang dieses zweiten XOR-Tors führt eine weitere, verzweigte Leitung zu einem weiteren Kontakt S3 des Umschalters 61, zum zweiten Eingang des ersten XOR-Tors 62 und zur Signalausgangsklemme A1. Der Ausgang des ersten XOR-Tors 62 ist mit den Eingängen eines Zählers 66 und eines Integrators 67 verbunden, deren Ausgänge die Ausgänge A2 bzw. A3 des Subsignalgenerators bilden.

Der Subsignalgenerator enthält weiter einen Eingang E2 für ein Signal von der in Fig. 4 gezeigten Schaltmatrix 54 und einen Eingang E3 für die von der Steuerlogik 56 erzeugten Signale zum Betätigen des Umschalters 61, sowie einen Eingang E4 für die Synchronisiertakte von dem in Fig. 4 gezeigten Taktuntersetzer 51, welche Synchronisiertakte in benachbarten Subsignalgeneratoren um je einen Arbeitstakt gegeneinander verschoben sind.

Beim Betrieb des erfindungsgemässen Signalgenerators wird die Folge der an der Eingangsklemme ankommenden Kryptosignale in den Serie-/Parallel-Wandler 52 eingegeben und parallel an die n Subsignalgeneratoren weitergeleitet. Das hat zur Folge, dass, wenn man die einzelnen Bits der Kryptosignalfolge fortlaufend numeriert, beispielsweise am Eingang E1 des Subsignalgenerators $53_1$ die Bits mit den Ordnungszahlen 1, $n+1$, $2n+1$, $3n+1$, usw. in der angegebenen Reihenfolge auftreten, während beispielsweise am Eingang E1 des nächsten Subsignalgenerators $53_2$ entsprechend die Bits mit den Ordnungszahlen 2, $n+2$, $2n+2$, $3n+2$, usw. erscheinen. Analoge Bit-Folgen ergeben sich für die übrigen Subsignalgeneratoren. Die n Subsignalgeneratoren bilden so, zusammen mit dem Serie-/Parallel-Wandler, einen Rahmen $R_n$ aus n aufeinanderfolgenden Zeitschlitzen.

Da die Länge des Rahmens $R_n$ mit der Periodendauer des untersetzten Arbeitstaktes übereinstimmt, treten die eingeblendeten Synchronisierbits bei vorhandener Synchronisierung stets im gleichen Zeitschlitz eines Rahmens, also auch am Eingang E1 desselben Subsignalgenerators auf, d.h., bei vorhandener Synchronisierung erscheint am Eingang eines der n Subsignalgeneratoren die vollständige Folge der Synchronisierbits, während an den Eingängen der übrigen Subsignalgeneratoren Folgen von ausgewählten Kryptosignalen ankommen.

Während der Startsynchronisierung zu Beginn einer Uebertragung steht der Umschalter 61 in jedem Subsignalgenerator in Stellung S2, so dass die empfangene Signalfolge in die Schieberegister 63 eingelesen wird. Die Ausgangssignale des zweiten XOR-Tors 64 werden im ersten XOR-Tor 62 mit den einlaufenden Signalen verglichen, und die Anzahl der aufeinanderfolgenden richtigen Vergleiche im Zähler 66 gezählt. Sobald der Zähler in einem der Sutsignalgeneratoren einen vorgegebenen Wert erreicht, erscheint am Ausgang A2 ein Signal, das an die Steuerlogik 56 weitergeleitet wird. Die Steuerlogik bewirkt dann die Umschaltung des Schalters 61 in die Stellung S3 und damit den autonomen Betrieb dieses Subsignalgenerators, dessen Ausgangssignal an der Klemme A1 dann zur Schaltmatrix 54 geleitet wird und als Ursignal für den Schlüsselrechner am Ausgang der Schaltmatrix erscheint. Zugleich bewirkt die Steuerlogik 56 auch die Umschaltung der Schalter 61 in den anderen Subsignalgeneratoren in die Stellung SI und damit das Einlesen der (über die Schaltmatrix zugeleiteten) Ausgangssignale des autonom laufenden Subsignalgenerators in deren Schieberegister.

Die Ausgangssignalfolge des autonom laufenden Subsignalgenerators wird weiter im ersten XOR-Tor 62 mit der empfangenen Signalfolge verglichen und die Ausgangssignale dieses Tors an den Integrator 67 geleitet. Dieser Integrator ist vorzugsweise eine digitale Ausführungsform eines RC-Integrators und erzeugt ein Ausgangssignal, das ein Mass für die Korrelation der beiden Signalfolgen ist.

Nach dem (phasenverschobenen) Einlesen der Ausgangssignalfolge des autonom laufenden Subsignalgenerators in die anderen Subsignalgeneratoren werden deren Umschalter 61 ebenfalls in die Stellung S3 geschaltet, so dass auch diese autonom laufen. Dann erscheint am Ausgang A3 jedes Subsignalgenerators ein Signal, das ein Mass für die Korrelation der erzeugten Signalfolge mit der am Eingang EI ankommenden Ursignalfolge ist.

Wie jeder Fachmann sofort erkennt, ist mit dem beschriebenen Ursignalgenerator sichergestellt, dass ein mit einem der Subsignalgeneratoren synchron laufendes Synchronisiersignal nach einer während eines Fadings der Uebertragung eingetretenen Phasenverschiebung oder einem beim Umschalten der Uebertragungsrichtung oder durch Störsignale bewirkten Phasensprung sofort einen anderen synchron laufenden Subsignalgenerator findet. Der Integrator 67 dieses synchron laufenden Subsignalgenerators erzeugt dann ein der Korrelation der einlaufenden und der am Ausgang des zweiten XOR- Tors erscheinenden Signalfolge entsprechendes Ausgangssignal A3 für die Steuerlogik, die dann das Signal am Ausgang A1 dieses Subsignalgenerators als neues Ursignal an die Schaltmatrix 54 (und von dort zum Schlüsselrechner) und an die anderen Subsignalgeneratoren weiterleitet. Es versteht sich, dass damit störende Unterbrüche der Entschlüsselung oder Unterbrechungen der Uebertragung wegen der raschen Umsynchronisierung des Ursignalgenerators im Empfangsgerät auf die Ansprechzeit des Korrelators reduziert werden können.

Eine weitere Reduktion der Unterbruchsdauer kann durch Kompensation der Ansprechzeit des Korrelators erreicht werden, indem das empfangene Signal verzögert und mit einem entsprechend verzögerten Schlüsselsignal entschlüsselt wird. In Fig. 6 ist eine derartige Anordnung mit einem Verzögerungsglied 71 und einem Schlüsselrechner 48' gezeigt, welcher ein verzögertes Schlüsselsignal erzeugt.

Im beschriebenen Beispiel enthält der Ursignalgenerator für jeden Zeitschlitz im Rahmen der übertragenen Signalfolge einen Subsignalgenerator, weshalb diese Anordnung nur für Phasenverschiebungen in der Vorwärts- oder der ückwärtsrichtung brauchbar ist. Um Phasenverschiebungen in der Vorwärts- und der Rückwärtsrichtung zu korrigieren, muss der Ursignalgenerator eine grössere Anzahl Subsignalgeneratoren aufweisen.

Werden innerhalb eines Kommunikationsnetzes, beispielsweise eines Funknetzes, sowohl verschlüsselte als auch nicht verschlüsselte Signale übertragen, kann das periodisch eingeblendete Synchronisiersignal zur Erkennung der verschlüsselt übertragenen Signale herangezogen werden. Mit dem beschriebenen Verfahren wird das Vorhandensein des Synchronisiersignals laufend überprüft, so dass damit auch die Umschaltung zwischen verschlüsselten und unverschlüsselten Signalen gesteuert werden kann.

Die neue Vorrichtung kann mit bekannten Halbleiterbauelementen aufgebaut werden, und es ist auch möglich, den neuen Ursignalgenerator als Halbleiterbaustein auszubilden. Geeignete Bauelemente und die Technik der Herstellung neuer Bausteine sind jedem Fachmann bekannt, weshalb auf deren detaillierte Beschreibung ausdrücklich verzichtet wird.

## Patentansprüche

1. Verfahren zum Synchronisieren der Verschlüsselung und Entschlüsselung beim Uebertragen digitaler, verschlüsselter Daten von einem Sender zu einem Empfänger, wobei sendeseitig eine Folge von Synchronisiersignalen mit einer ersten Taktfrequenz erzeugt und periodisch in einen mit einer zweiten Taktfrequenz übertragenen Datenstrom eingeblendet wird, dadurch gekennzeichnet, dass nach einer erstmaligen Synchronisierung empfangsseitig wenigstens eine, mit der eingeblendeten Folge von Synchronisiersignalen übereinstimmende Signalfolge erzeugt und der übertragene Datenstrom in zeitliche Rahmen (R) mit mehreren Zeitschlitzen ($s_n$, $i_{n,1}$... $i_{n,9}$) unterteilt wird, wobei die Länge eines Rahmens ($R_n$) gleich der Periodendauer der ersten Taktfrequenz und die Länge eines Zeitschlitzes gleich der Periodendauer der zweiten Taktfrequenz ist, und dass mit der empfangsseitig erzeugten Signalfolge in mehreren Zeitschlitzen des empfangenen Datenstroms Korrelationen durchgeführt und die Ergebnisse dieser Korrelationen zu einer Ueberwachung des empfangenen Datenstroms und einer Korrektur der Synchronisierung im Empfänger verwendet werden.

2. Verfahren nach Anspruch 1, dadurch gekennzeichnet, dass eine Korrektur der Synchronisierung dann erfolgt, wenn die in einem Zeitschlitz ursprünglich vorhandene Korrelation nicht mehr besteht und in einem anderen Zeitschlitz eine Korrelation festgestellt wird.

3. Verfahren nach Anspruch 1, dadurch gekennzeichnet, dass für jeden Zeitschlitz, in dem eine Korrelation durchgeführt wird, eine mit der eingeblendeten Folge von Synchronisiersignalen übereinstimmende Signalfolge erzeugt wird, wobei die zwei verschieden Zeitschlitzen zugeordneten Signalfolgen gemäss dem Abstand dieser Zeitschlitze gegeneinander phasenverschoben sind, und dass die dem Zeitschlitz mit maximaler Korrelation zugeordnete Signalfolge als Folge von Synchronisiersignalen für den Empfänger verwendet wird.

4. Verfahren nach Anspruch 1, dadurch gekennzeichnet, dass die Ansprechzeit bei der Korrelation durch Verzögerung des Datensignals und Erzeugung eines verzögerten Schlüsselsignals kompensiert wird.

5. Verfahren nach Anspruch 1, dadurch gekennzeichnet, dass bei fehlender Korrelation in allen Zeitschlitzen nach Ablauf einer vorgegebenen Zeitspanne eine Neusynchronisierung eingeleitet wird.

6. Verfahren nach Anspruch 5, dadurch gekennzeichnet, dass der Anfangspunkt der vorgegebenen Zeitspanne zusätzlich von einem Qualitätskriterium des empfangenen Signals abhängig ist.

7. Verfahren nach Anspruch 5, dadurch gekennzeichnet, dass bei ausbleibender erstmaliger Synchronisierung oder ausbleibender Neusynchronisierung nach einer vorgegebenen Zeitspanne das empfangene Signal als nicht verschlüsseltes Signal gekennzeichnet wird.

8. Vorrichtung zum Ausführen des Verfahrens gemäss dem Anspruch 1 in einer Anlage zum Uebertragen verschlüsselter Daten, welche Anlage mindestens einen Sender aufweist mit einem Taktgeber (18), einem Ursignalgenerator (13), einem Schlüsselrechner (17) sowie einem Modulator (12), der den Strom der Klarsignale mit den verschlüsselten Ursignalen kodiert und bei jedem n-ten Takt ein vom Ursignalgenerator (13) erzeugtes Synchronisiersignal in den Strom der kodierten Signale einblendet, und mindestens einen Empfänger mit einem Taktgeber (50), der mit einer von den empfangenen Signalen gesteuerten Phasenregelschleife (36) zusammenwirkt, einem Taktuntersetzer (51), einem Ursignalgenerator (70), einem Schlüsselrechner (48), sowie einem Demodulator (38), die den Strom der kodierten Signale mit den verschlüsselten Ursignalen dekodiert, dadurch gekennzeichnet, dass der Ursignalgenerator (70) im Empfänger mehrere zum Erzeugen gleichartiger und mindestens einen Arbeitstakt gegeneinander verschobener Signalfolgen vorgesehene Subsignalgeneratoren ($53_1 \ldots 53_n$) enthält und jeder Subsignalgenerator erste Einrichtungen (66, 67) aufweist, die den Gleichlauf der Synchronisiersignale in den empfangenen mit den im Subsignalgenerator erzeugten Signalfolgen vergleichen und zweite Einrichtungen (54, 56), die den Signalausgang desjenigen Subsignalgenerators, dessen Synchronisiersignale die grösste Uebereinstimmung mit den Synchronisiersignalen in der empfangenen Signalfolge aufweisen, mit dem Synchronisiersignaleingang des Schlüsselrechners und mit Signaleingängen (E2) der weiteren Subsignalgeneratoren verbinden.

9. Vorrichtung nach Anspruch 8, dadurch gekennzeichnet, dass für die Synchronisierung nach Phasenverschiebungen oder -sprüngen in der Vorwärts- oder der Rückwärtsrichtung die Anzahl der Subsignalgeneratoren (53) grösser gleich der Anzahl der Zeitschlitze ($s_n$, $i_{n,1} \ldots i_{n,9}$) eines Rahmens ($R_n$) im ausgesendeten Datenstrom ist.

10. Vorrichtung nach Anspruch 8, dadurch gekennzeichnet, dass jeder Subsignalgenerator ein Schieberegister (63) enthält und einen Umschalter (61), um den Eingang dieses Registers (63) wahlweise mit einer Eingangsklemme (E1) für die empfangenen Signale oder mit dem Ausgang eines zweiten XOR-Tors (64), dessen beide Eingänge an Speicherstellen im Schieberegister angeschlossen sind, oder mit einem Signalausgang eines der anderen Subsignalgeneratoren zu verbinden, sowie ein erstes XOR-Tor (62), dessen Eingänge mit der Eingangsklemme (E1) für die empfangenen Signale und mit dem Ausgang des zweiten XOR-Tors (64) verbunden sind und dessen Ausgang an den Eingang eines Zählers (66) und eines Integrators (67) angeschlossen ist, sowie eine erste mit dem Ausgang des zweiten XOR-Tors (64) verbundene Ausgangsklemme (A1) für das Ausgangssignal des Subsignalgenerators und eine zweite und eine dritte mit dem Ausgang des Zählers bzw. des Integrators verbundene Ausgangsklemme (A2 bzw. A3).

11. Vorrichtung nach Anspruch 8, dadurch gekennzeichnet, dass der Ursignalgenerator einen Serie-/Parallel-Wandler (52) enthält, der die empfangene Signalfolge taktverschoben an die Signaleingänge (E1) der Subsignalgeneratoren ($53_1 \ldots 53_n$) weiterleitet.

12. Vorrichtung nach Anspruch 8, dadurch gekennzeichnet, dass zwischen einer Eingangsklemme (35) und dem Demodulator (38) ein Verzögerungsglied (71) geschaltet ist und im Schlüsselrechner (48') ein verzögertes Schlüsselsignal erzeugt wird.

**Claims**

1. Method for synchronizing the coding and decoding during the transmission of digital, coded data from a transmitter to a receiver, in which method a sequence of synchronizing signals having a first clock frequency is generated at the transmitter and is periodically inserted into a data stream transmitted with a second clock frequency, characterized in that, after a first synchronization, at least one signal sequence corresponding to the inserted sequence of synchronizing signals is generated at the receiver and the transmitted data stream is subdivided into time frames (Rn) having several time slots ($s_n$, $i_{n,1} \ldots i_{n,9}$), the length of one frame ($R_n$) being equal to the duration of one period of the first clock frequency and the length of one time slot being equal to the duration of one period of the second clock frequency, and that the signal sequence generated at the receiver is used for performing correlations in several time slots of the received data stream and the results of these correlations are used for monitoring the received data stream and for correcting the synchronization in the receiver.

2. Method according to Claim 1, characterized in that a correction of the synchronization takes place when the correlation originally present in a time slot no longer exists and a correlation is detected in another time slot.

3. Method according to Claim 1, characterized in that a signal sequence corresponding to the inserted sequence of synchronizing signals is generated for each time slot in which a correlation is performed, the signal sequences allocated to two different time slots being shifted in phase with respect to each other in accordance with the distance between these time slots, and that the signal sequence allocated to the time slot having the maximum correlation is used as a sequence of synchronizing signals for the receiver.

4. Method according to Claim 1, characterized in that the response time during the correlation is compensated by delaying the data signal and generating a delayed code signal.

5. Method according to Claim 1, characterized in that, if correlation is lacking in all time slots, resynchronization is initiated after a predetermined period of time has elapsed.

6. Method according to Claim 5, characterized in that the starting point of the predetermined period of time is additionally dependent on a quality criterion of the received signal.

7. Method according to Claim 5, characterized in that, if first synchronization fails to occur or resynchronization fails to occur after a predetermined period of time, the received signal is identified as non-coded signal.

8. Device for carrying out the method according to Claim 1 in a system for transmitting coded data, this system being provided with at least one transmitter having a clock generator (18), an original-signal generator (13), a code computer (17) and a modulator (12) which codes the stream of plain signals with the coded original signals and inserts with each n-th clock pulse a synchronizing signal, generated by the original-signal generator (13), into the stream of coded signals, and at least one receiver having a clock generator (50) which operates in conjunction with a phase-lock loop (36) controlled by the received signals, a clock scaler (51), an original-signal generator (70), a code computer (48), and a demodulator (38) which decodes the stream of coded signals with the coded original signals, characterized in that the originalsignal generator (70) in the receiver contains several subsignal generators ($53_1...53_n$) provided for generating similar signal sequences which are displaced by at least one function cycle with respect to each other, and each subsignal generator is provided with first devices (66, 67) which compare the synchronism of the synchronizing signals in the received signal sequences with the signal sequences generated in the subsignal generator and second devices (54, 56) which connect the signal output of the subsignal generator whose synchronizing signals show the greatest correspondence with the synchronizing signals in the received signal sequence to the synchronizing signal input of the code computer and to signal inputs (E2) of the further subsignal generators.

9. Device according to Claim 8, characterized in that the number of subsignal generators (53) is greater than or equal to the number of time slots ($s_n$, $i_n$ $i_{n,9}$) of one frame ($R_n$) in the transmitted data stream for synchronization after phase displacements or shifts in the forward or the reverse direction.

10. Device according to Claim 8, characterized in that each subsignal generator contains a shift register (63) and a change-over switch (61) to connect the input of this register (63) optionally to an input terminal (E1) for the received signals or to the output of a second XOR gate (64) the two inputs of which are connected to storage locations in the shift register, or to a signal output of one of the other subsignal generators, and a first XOR gate (62) the inputs of which are connected to the input terminal (E1) for the received signals and to the output of the second XOR gate (64) and the output of which is connected to the input of a counter (66) and of an integrator (67), and a first output terminal (A1), connected to the output of the second XOR gate (64), for the output signal of the subsignal generator and a second and a third output terminal (A2 and A3, respectively) connected to the output of the counter and of the integrator, respectively.

11. Device according to Claim 8, characterized in that the original-signal generator contains a series/ parallel converter (52) which passes the received signal sequence clock-shifted to the signal inputs (EI) of the subsignal generators ($53_1...53_n$).

12. Device according to Claim 8, characterized in that a delay section (71) is connected betüeen an input terminal (35) and the demodulator (38) and a delayed code signal is generated in the code computer (48').

**Revendications**

1.- Procédé pour synchroniser le chiffrement et le déchiffrement lors de la transmission de données numériques chiffrées depuis un émetteur vers un récepteur, suivant lequel, du côté de l'émetteur, une séquénce de signaux de synchronisation présentant une première fréquence d'impulsions est produite et est périodiquement intercalée dans un flux de données transmis à une seconde fréquence d'impulsions, caractérisé en ce qu'après une première synchronisation, du côté du récepteur, au moins une séquence de signaux qui correspond à la séquence de signaux de synchronisation intercalée est produite et le flux de données transmis est divisé en trames de temps ($R_n$) comportant plusieurs tranches de temps ($s_n$, $i_{n,1}...i_{n,9}$), la longueur d'une trame ($R_n$) étant égale à la période de la première fréquence d'impulsions et la longueur d'une tranche de temps étant égale a la periode de la seconde fréquence d'impulsions, et en ce qu'à l'aide de la séquence de signaux produite du côté du récepteur, dans plusieurs tranches de temps du flux de données reçu, des corrélations sont effectuées et les résultats de ces corrélations sont utilisés aux fins d'une surveillance du flux de données reçu et d'une correction de la synchronisation dans le récepteur.

2.- Procédé suivant la revendication 1, caractérisé en ce qu'une correction de la synchronisation est effectuée lorsque la corrélation initialement présente dans une tranche de temps n'existe plus et qu'une corrélation est constatée dans une autre tranche de temps.

3.- Procédé suivant la revendication 1, caractérisé en ce que, pour chaque tranche de temps dans laquelle une corrélation est effectuée, une séquence de signaux correspondant à la séquence de signaux de synchronisation intercalée est produite, tandis que les séquences de signaux associées à deux tranches de temps différentes sont déphasées l'une par rapport à l'autre selon l'écart de ces tranches de temps et que la séquence de signaux associée à la tranche de temps à corrélation maximale est utilisée comme sequence de signaux de synchronisation pour le récepteur.

4.- Procédé suivant la revendication 1, caractérisé en ce que le temps de réaction lors de la corrélation est compensé par retardement du signal de données et production d'un signal de chiffrement retardé.

5.- Procédé suivant la revendication 1, caractérisé en ce qu'en cas d'absence de corrélation dans toutes les tranches de temps, au terme d'un intervalle de temps prédéfini, une nouvelle synchronisation est introduite.

6.- Procédé suivant la revendication 5, caractérisé en ce que le point initial de l'intervalle de temps prédéfini dépend, en outre, d'un critère de qualité du signal reçu.

7.- Procédé suivant la revendication 5, caractérisé en ce qu'en cas d'absence persistante d'une première synchronisation ou d'une nouvelle synchronisation, après un intervalle de temps prédéfini, le signal reçu est considéré comme signal non chiffré.

8.- Dispositif pour l'exécution du procédé suivant la revendication 1 dans une installation destinée à transmettre des données chiffrées, cette installation comportant au moins un émetteur avec un générateur d'impulsions (18), un générateur de signaux primitifs (13), un calculateur de chiffre (17) ainsi qu'un modulateur (12) qui code le flux des signaux en clair au moyen des signaux primitifs chiffrés et qui, à chaque n-ième impulsion, intercale dans le flux des signaux codés, un signal de synchronisation produit par le générateur de signaux primitifs (13), et au moins un récepteur avec un générateur d'impulsions (50) qui coopère avec une boucle de régulation de phase (36) commandée par les signaux reçus, un réducteur d'impulsions (51), un générateur de signaux primitifs (70), un calculateur de chiffre (48), ainsi qu'un démodulateur (38) qui décode le flux des signaux codés au moyen des signaux primitifs chiffrés, caractérisé en ce que le générateur de signaux primitifs (70) du récepteur comprend plusieurs générateurs de sous-signaux $(53_1...53_n)$ prévus pour produire des séquences de signaux semblables et décalées réciproquement d'au moins un cycle de travail et chaque générateur de soussignaux comporte des premiers dispositifs (66, 67) qui comparent le synchronisme des signaux de synchronisation dans les séquences de signaux reçues et dans celles produites dans le générateur de sous-signaux et des seconds dispositifs (54, 56) qui connectent la sortie de signal du générateur de sous-signaux, dont les signaux de synchronisation présentent la plus forte concordance avec les signaux de synchronisation dans la séquence de signaux reçue, à l'entrée de signal de synchronisation du calculateur de chiffre et à des entrées de signaux (E2) des autres générateurs de sous-signaux.

9.- Dispositif suivant la revendication 8, caractérisé en ce que, oour la synchronisation après des déphasages ou des sauts de phase vers l'avant ou vers l'arrière, le nombre des générateurs de soussignaux (53) est supérieur ou égal au nombre des tranches de temps $(s_n, i_{n,1}...i_{n,9})$ d'une trame $(R_n)$ dans le flux de données émis.

10.- Dispositif suivant la revendication 8, caractérisé en ce que chaque générateur de sous-signaux contient un registre à décalage (63) et un commutateur (61) pour connecter l'entrée de ce registre (63) sélectivement à une borne d'entrée (E1) pour les signaux reçus ou à la sortie d'un second circuit-porte OU exclusif (64) dont les deux entrées sont connectées à des endroits de stockage dans le registre à décalage, ou à une sortie de signal d'un des autres générateurs de sous-signaux, ainsi qu'un premier circuit-porte OU exclusif (62) dont les entrées sont connectées à la borne d'entrée (E1) pour les signaux reçus et à la sortie du second circuit-porte OU exclusif (64) et dont la sortie est connectée à l'entrée d'un compteur (66) et d'un intégrateur (67), ainsi qu'une première borne de sortie (A1) pour le signal de sortie du générateur de sous-signaux, connectée à la sortie du second circuit-porte OU exclusif (64) et une deuxième ainsi qu'une troisième borne de sortie (A2, A3) connectées à la sortie du compteur ou de l'intégrateur.

11.- Dispositif suivant la revendication 8, caractérisé en ce que le générateur de signaux primitifs comporte un convertisseur série-parallèle (52) qui transmet la séquence de signaux reçue avec un décalage d'impulsions aux entrées de signaux (E1) des générateurs de sous-signaux $(53_1...53_n)$.

12.- Dispositif suivant la revendication 8, caractérisé en ce qu'entre une borne d'entrée (35) et le démodulateur (38) est connecté un élément de retardement (71) et dans le calculateur de chiffre (48') est produit un signal de chiffre retardé.

FIG.1

FIG.2

FIG.3

FIG.4

FIG.5

FIG.6